(19) Europäisches Patentamt
European Patent Office
Office européen des brevets

(11) EP 4 796 596 A1

(12) EUROPEAN PATENT APPLICATION
published in accordance with Art. 153(4) EPC

(43) Date of publication:
**26.08.2026 Bulletin 2026/35**

(21) Application number: **24879718.5**

(22) Date of filing: **16.10.2024**

(51) International Patent Classification (IPC):
***C08L 77/06*** (2006.01) ***C08G 69/26*** (2006.01)
***C08K 3/013*** (2018.01) ***C08K 5/5313*** (2006.01)

(52) Cooperative Patent Classification (CPC):
**C08G 69/26; C08K 3/013; C08K 5/5313; C08L 77/06**

(86) International application number:
**PCT/JP2024/036744**

(87) International publication number:
**WO 2025/084296 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.10.2023 JP 2023179584**

(71) Applicant: **Mitsui Chemicals, Inc.**
**Tokyo 104-0028 (JP)**

(72) Inventors:
- **AMANO, Akinori**
  **Sodegaura-shi, Chiba 299-0265 (JP)**
- **WASHIO, Isao**
  **Sodegaura-shi, Chiba 299-0265 (JP)**
- **DOI, Haruka**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

# (54) POLYAMIDE RESIN COMPOSITION AND MOLDED OBJECT

(57) A polyamide resin composition comprising polyamide resins and a phosphinic acid salt compound (C), the content of which is 10.0-22.0 parts by mass per 100 parts by mass of the polyamide resins, wherein the polyamide resins include a polyamide resin (A) having a melting point, as determined with a differential scanning calorimeter (DSC), of 280°C or higher and an intrinsic viscosity [η], as determined at a temperature of 25°C in 96.5% sulfuric acid, of 0.90 dl/g or higher and a polyamide resin (B) having a quantity of heat of fusion, as determined with a differential scanning calorimeter (DSC), of 0-5 J/g.

EP 4 796 596 A1

## Description

### Technical Field

The present invention relates to a polyamide resin composition and a molded article.

### Background Art

A polyamide resin composition has been known as a molding material. Polyamide resin compositions are widely used as materials for various components such as automotive components and electric/electronic components. In addition, molded articles of polyamide resin compositions are known to have excellent mechanical strength.

A polyamide resin composition is flammable, and thus, for example, when a polyamide resin composition is used for an automotive component, the molded article thereof is required to have flame retardancy. For such a requirement, it is known that flame retardancy can be imparted to a molded article by adding a flame retardant to a polyamide resin composition.

For example, PTL 1 to PTL 7 disclose a polyamide resin composition including an aromatic polyamide resin and a flame retardant. It is said that the molded articles obtained from the polyamide resin compositions disclosed in PTL 1 to PTL 7 exhibit satisfactory flame retardancy. In addition, these polyamide resin compositions contain a phosphorus-based flame retardant such as a phosphinate compound as a flame retardant.

### Citation List

### Patent Literature

PTL 1
Japanese Patent Application Laid-Open No. 2012-022116
PTL 2
Japanese Patent Application Laid-Open No.2015-120908
PTL 3
Japanese Patent Application Laid-Open No. 2013-542311
PTL 4
Japanese Patent Application Laid-Open No. 2013-523958
PTL 5
Japanese Patent Application Laid-Open No. 2015-110764
PTL 6
Japanese Patent Application Laid-Open No. 2009-079212
PTL 7
Japanese Patent Application Laid-Open No. 2017-500705

### Summary of Invention

### Technical Problem

As disclosed in PTL 1 to PTL 7, polyamide resin compositions that can achieve satisfactory flame retardancy of molded articles are known.

Meanwhile, for example, for producing a component such as a piston, a cylinder, or a pressure-resistant container that requires particularly high mechanical strength by using a polyamide resin composition, a molded article including a thick-walled portion (for example, having a thickness of 3.5 mm or more) is produced in some cases. In this case, when a molded article including a thick-walled portion is produced by using a polyamide resin composition that includes a phosphinate compound as the flame retardant as disclosed in PTL 1 to PTL 7, the mechanical strength of the molded article decreases.

An object of the present invention is to provide a polyamide resin composition that, when molded into a molded article including a thick-walled portion, can suppress a decrease in mechanical strength of the molded article and achieve excellent flame retardancy of the molded article. Another object of the present invention is to provide a molded article obtained by molding the polyamide resin composition.

Solution to Problem

In order to achieve the above objects, one aspect of the present invention relates to a polyamide resin composition according to the following [1] to [6].

[1] A polyamide resin composition, comprising:

a polyamide resin; and
a phosphinate compound (C) having a content of 10.0 parts by mass or more and 22.0 parts by mass or less based on 100 parts by mass of the polyamide resin, wherein
the polyamide resin includes

a polyamide resin (A) including a dicarboxylic acid-derived component unit (Aa) and a diamine-derived component unit (Ab), and
a polyamide resin (B) including a dicarboxylic acid-derived component unit (Ba) and a diamine-derived component unit (Bb),

the polyamide resin (A) has a melting point of 280°C or higher as measured by a differential scanning calorimeter (DSC) and has an intrinsic viscosity [$\eta$] of 0.90 dl/g or more as measured in 96.5% sulfuric acid at a temperature of 25°C,
the polyamide resin (B) has a heat of fusion ($\Delta$H) of 0 J/g or more and 5 J/g or less as measured by the differential scanning calorimeter (DSC),
the polyamide resin (B) has a content of 10.0 parts by mass or more and 40.0 parts by mass or less based on 100 parts by mass of the polyamide resin,
the dicarboxylic acid-derived component unit (Aa) and the dicarboxylic acid-derived component unit (Ba) each include a component unit derived from terephthalic acid, and
the diamine-derived component unit (Ab) and the diamine-derived component unit (Bb) each include a component unit derived from 1,6-diaminohexane.

[2] The polyamide resin composition according to [1] in which the melting point of the polyamide resin (A) as measured by the differential scanning calorimeter (DSC) is 320°C or lower.
[3] The polyamide resin composition according to [1] or [2] further including:
a reinforcing material (D) having a content of 30% by mass or more based on a total mass of the polyamide resin composition.
[4] The polyamide resin composition according to any one of [1] to [3] in which he dicarboxylic acid-derived component unit (Ba) further includes a component unit derived from isophthalic acid.
[5] The polyamide resin composition according to any one of [1] to [4] in which the dicarboxylic acid-derived component unit (Aa) further includes a component unit derived from adipic acid.
[6] The polyamide resin composition according to any one of [1] to [5], in which the polyamide resin composition is used for producing a molded article including a thick-walled portion having a thickness of 3.5 mm or more.
In order to achieve the above objects, one aspect of the present invention relates to a molded article according to the following [7].
[7] A molded article obtained by molding the polyamide resin composition according to any one of [1] to [6], in which the molded article includes a thick-walled portion having a thickness of 3.5 mm or more.

Advantageous Effects of Invention

The present invention can provide a polyamide resin composition that, when molded into a molded article including a thick-walled portion, can suppress a decrease in mechanical strength of the molded article and achieve excellent flame retardancy of the molded article. The present invention can also provide a molded article obtained by molding the polyamide resin composition.

Description of Embodiments

Hereinafter, an embodiment of the present invention will be described in detail. The present invention is not limited to the following embodiments. In the numerical ranges described stepwise in the present disclosure, the upper limit value or the lower limit value described in one numerical range may be replaced with an upper limit value or a lower limit value of the numerical ranges described in other steps. In addition, in the numerical ranges described in the present

disclosure, the upper limit value or the lower limit value of each numerical range may be replaced with the values shown in Examples.

1. Polyamide resin composition

The polyamide resin composition according to the present embodiment includes a polyamide resin and a phosphinate compound (C) having a content of 10.0 parts by mass or more and 22.0 parts by mass or less based on 100 parts by mass of the polyamide resin. The polyamide resin includes the following: a polyamide resin (A) including a component unit (Aa) derived from a dicarboxylic acid (herein, a component unit derived from a dicarboxylic acid is also simply referred to as "dicarboxylic acid-derived component unit") and a component unit (Ab) derived from a diamine (herein, a component unit derived from a diamine is also simply referred to as "diamine-derived component unit"); and a polyamide resin (B) including a dicarboxylic acid-derived component unit (Ba) and a diamine-derived component unit (Bb). The polyamide resin (A) has a melting point of 280°C or higher as measured by a differential scanning calorimeter (DSC), and an intrinsic viscosity [η] of 0.90 dl/g or more as measured in 96.5% sulfuric acid at a temperature of 25°C. The polyamide resin (B) has a heat of fusion (ΔH) of 0 J/g or more and 5 J/g or less as measured by a differential scanning calorimeter (DSC). The content of the polyamide resin (B) is 10.0 parts by mass or more and 40.0 parts by mass or less based on 100 parts by mass of the polyamide resin. Further, dicarboxylic acid-derived component unit (Aa) and the dicarboxylic acid-derived component unit (Ba) each include a component unit derived from terephthalic acid, and the diamine-derived component unit (Ab) and the diamine-derived component unit (Bb) each include a component unit derived from 1,6-diaminohexane.

As described above, when a molded article including a thick-walled portion is produced by using a polyamide resin composition including a phosphinate compound as the flame retardant thereof as disclosed in PTL 1 to PTL 7, the tensile strength of the molded article decreases. The reasons why such decrease occurs are as follows.

In the case of molding a thick-walled portion having a thickness of a certain level or more, a temperature difference is more likely to occur between the outer side and the inner side of the thick-walled portion during cooling, and thus a timing at which the polyamide resin composition is cured is more likely to differ between the outer side and the inner side of the thick-walled portion. Specifically, in the case of cooling and solidifying the polyamide resin composition having been melted during molding, the polyamide resin composition on the outer side (a portion close to the surface of the thick-walled portion) of the thick-walled portion is cooled quickly, but the polyamide resin composition on the inner side (a portion far from the surface of the thick-walled portion) of the thick-walled portion is cooled relatively slowly. When the outer side of the thick-walled portion is cooled and cured first, the uncured resin composition on the inner side is pulled toward the outer side by shrinkage occurring when the resin composition on the outer side is cured. As a result, the resin composition on the inner side, which cures later, may cure with bubbles formed in it, or cracks may occur due to tensile stress. Here, when the polyamide resin composition includes the phosphinate compound, voids or cracks are more likely to occur particularly in the vicinity of an interface between the polyamide resin and the phosphinate compound, and thus the thick-walled portion is more likely to become brittle.

In addition, the phosphinate compound is thermally decomposed by shear heat generated during kneading of the components constituting the polyamide resin composition and heating for melting the polyamide resin composition during molding. As a result of the thermal decomposition, phosphoric acid is generated, and the generated phosphoric acid decomposes the polyamide resin. In particular, in the case of molding the thick-walled portion, decomposition gas generated when the polyamide resin is decomposed is not completely discharged from the thick-walled portion of the molded article, and voids are more likely to be generated inside, thereby reducing the density of the thick-walled portion.

For these reasons, it is considered that the tensile strength of the molded article decreases when a molded article including a thick-walled portion is produced.

In response to such a decrease, in the polyamide resin composition according to the present embodiment, the content of the phosphinate compound is set to 22.0 parts by mass or less based on the total mass of the polyamide resin, thereby reducing the amount of the interface between the polyamide resin and the phosphinate compound. Further, the polyamide resin (B) having low crystallinity is added to the polyamide resin (A), which generates crystals in the molded article in the polyamide resin composition, and thus the crystallinity of the polyamide resin can be moderately lowered. As a result, the polyamide resin is less likely to shrink when the polyamide resin is cured, and thus the resin on the inner side of the thick-walled portion is less likely to be pulled toward the outer side in the case of cooling and solidifying the polyamide resin composition.

As a result, the occurrence of voids and cracks in the thick-walled portion can be sufficiently suppressed.

In addition, by reducing the amount of the phosphinate compound, the amount of phosphoric acid generated by thermal decomposition can also be reduced. In addition, the polyamide resin composition includes the polyamide resin (A) having a high molecular weight (specifically, an intrinsic viscosity [η] of 0.90 dl/g or more), and therefore, even when the polyamide resin is decomposed by the phosphoric acid, the molecular weight of the polyamide resin can be maintained high.

For these reasons, it is considered that the polyamide resin composition according to the present embodiment can increase the tensile strength of the molded article including a thick-walled portion.

In addition, the inventors have found through their studies that even when the content of the phosphinate compound (C) in the polyamide resin composition is lower than a conventional polyamide resin composition, the flame retardancy of the molded article can be improved.

For these reasons, the polyamide resin composition according to the present embodiment is suitable for producing a molded article including a thick-walled portion having a certain thickness (for example, 3.5 mm or more). Hereinafter, the polyamide resin composition according to the present embodiment will be described based on the above findings.

1-1. Polyamide resin (A)

The polyamide resin (A) is a polyamide resin having a melting point of 280°C or higher as measured by a differential scanning calorimeter (DSC). The polyamide resin (A) forms crystals in the molded article and can increase the mechanical strength (tensile strength or the like) of the molded article. A method for measuring the melting point of the polyamide resin (A) will be described below.

The polyamide resin (A) includes a dicarboxylic acid-derived component unit (Aa) and a diamine-derived component unit (Ab).

(Dicarboxylic acid-derived component unit (Aa))

The dicarboxylic acid-derived component unit included in the polyamide resin (A) includes a component unit derived from terephthalic acid.

The content of the component unit derived from terephthalic acid is preferably 20 mol% or more and 100 mol% or less, more preferably 30 mol% or more and 90 mol% or less, still more preferably 40 mol% or more and 85 mol% or less, and even more preferably 40 mol% or more and 65 mol% or less, based on the total number of moles of the dicarboxylic acid-derived component unit (Aa). When the content is 20 mol% or more, the concentration of aromatic rings in the polyamide resin (A) increases, and the polyamide resin is more likely to be carbonized. As a result, the flame retardancy of the molded article can be further increased.

The dicarboxylic acid-derived component unit (Aa) may include a component unit derived from a dicarboxylic acid other than the component unit derived from terephthalic acid. Examples of the other dicarboxylic acids include aliphatic dicarboxylic acids, alicyclic dicarboxylic acids, and aromatic dicarboxylic acids other than terephthalic acid. Among these, an aliphatic dicarboxylic acid is preferred.

Examples of the aliphatic dicarboxylic acids include aliphatic dicarboxylic acids each having 4 or more and 20 or less carbon atoms. The number of carbon atoms is preferably 6 or more and 12 or less. Examples of such an aliphatic dicarboxylic acid include adipic acid, azelaic acid, and sebacic acid. Among these, adipic acid and sebacic acid are preferred.

The content of the component unit derived from an aliphatic dicarboxylic acid is preferably 0 mol% or more and 60 mol% or less, and more preferably 0 mol% or more and 45 mol% or less, based on the total number of moles of the dicarboxylic acid-derived component unit (Aa).

Examples of the alicyclic dicarboxylic acids include cyclohexanedicarboxylic acid and an ester thereof.

Examples of the aromatic dicarboxylic acids other than terephthalic acid include isophthalic acid, 2-methylterephthalic acid, and naphthalenedicarboxylic acid.

The content of the component units derived from an alicyclic dicarboxylic acid and an aromatic dicarboxylic acid other than terephthalic acid is preferably 20 mol% or more and 80 mol% or less, and more preferably 25 mol% or more and 75 mol% or less, based on the total number of moles of the dicarboxylic acid-derived component unit (Aa).

(Diamine-derived component unit (Ab))

The diamine-derived component unit included in the polyamide resin (A) includes a component unit derived from 1,6-diaminohexane.

The content of the component unit derived from 1,6-diaminohexane is preferably 30 mol% or more and 100 mol% or less, and more preferably 70 mol% or more and 100 mol% or less, based on the total number of moles of the diamine-derived component unit (Ab).

The diamine-derived component unit (Ab) may include a component unit derived from a diamine other than the component unit derived from 1,6-diaminohexane. Examples of the other diamines include aliphatic diamines (other than 1,6-diaminohexane) each having 4 or more and 15 or less carbon atoms, alicyclic diamines each having 4 to 20 carbon atoms, and aromatic diamines.

The number of carbon atoms in the aliphatic diamine is preferably 4 or more and 12 or less, and more preferably 6 or more and 12 or less. Examples of the aliphatic diamines include linear alkylene diamines and branched alkylene diamines.

Examples of the linear alkylene diamines include 1,4-diaminobutane, 1,7-diaminoheptane, 1,8-diaminooctane, 1,9-diaminononane, 1,10-diaminodecane, 1,11-diaminoundecane, and 1,12-diaminododecane. Among these, 1,9-diaminononane and 1,10-diaminodecane are preferred. The linear alkylene diamine may be included alone or in combination of two or more types thereof.

Examples of the branched alkylene diamines include 2,2-dimethyldiaminopropane, 1,1-dimethyl-1,4-diaminobutane, 1-ethyl-1,4-diaminobutane, 1,2-dimethyl-1,4-diaminobutane, 1,3-dimethyl-1,4-diaminobutane, 1,4-dimethyl-1,4-diaminobutane, 2,3-dimethyl-1,4-diaminobutane, 2-methyl-1,5-diaminopentane, 2,5-dimethyl-1,6-diaminohexane, 2,4-dimethyl-1,6-diaminohexane, 3,3-dimethyl-1,6-diaminohexane, 2,2-dimethyl-1,6-diaminohexane, 2,2,4-trimethyl-1,6-diaminohexane, 2,4,4-trimethyl-1,6-diaminohexane, 2,4-diethyl-1,6-diaminohexane, 2,3-dimethyl-1,7-diaminoheptane, 2,4-dimethyl-1,7-diaminoheptane, 2,5-dimethyl-1,7-diaminoheptane, 2,2-dimethyl-1,7-diaminoheptane, 2-methyl-4-ethyl-1,7-diaminoheptane, 2-ethyl-4-methyl-1,7-diaminoheptane, 2,2,5,5-tetramethyl-1,7-diaminoheptane, 3-isopropyl-1,7-diaminoheptane, 3-isooctyl-1,7-diaminoheptane, 2-methyl-1,8-diaminooctane, 1,3-dimethyl-1,8-diaminooctane, 1,4-dimethyl-1,8-diaminooctane, 2,4-dimethyl-1,8-diaminooctane, 3,4-dimethyl-1,8-diaminooctane, 4,5-dimethyl-1,8-diaminooctane, 2,2-dimethyl-1,8-diaminooctane, 3,3-dimethyl-1,8-diaminooctane, 4,4-dimethyl-1,8-diaminooctane, 3,3,5-trimethyl-1,8-diaminooctane, 2,4-diethyl-1,8-diaminooctane, and 5-methyl-1,9-diaminononane. Among these, 2-methyl-1,8-diaminooctane is preferred.

Examples of the alicyclic diamines each having 4 to 20 carbon atoms include 1,4-diaminocyclohexane, 1,3-diaminocyclohexane, 1,3-bis(aminomethyl)cyclohexane, 2,5-bis(aminomethyl)norbornane, and 2,6-bis(aminomethyl) norbornane. Examples of the aromatic diamine include m-xylylenediamine.

The content of the component unit derived from another diamine is preferably 0 mol% or more and 70 mol% or less, and more preferably 0 mol% or more and 30 mol% or less, based on the total number of moles of the diamine-derived component unit (Ab).

The component units of the polyamide resin (A1) and the ratio thereof can be calculated from a charging ratio when the polyamide resin (A1) is prepared or can be measured by an NMR method.

In the case of $^{1}$H-NMR measurement, for example, the measurement can be performed using a nuclear magnetic resonance apparatus (ECX400 type manufactured by JEOL Ltd.), with deuterated o-dichlorobenzene as a solvent, under the following conditions: the sample concentration is 20 mg/0.6 mL; the measurement temperature is 120°C; the observed nucleus is $^{1}$H (400 MHz); the sequence is a single pulse; the pulse width is 5.12 $\mu$ seconds (45° pulse); the repetition time is 7.0 seconds; and the number of integrations is 500 or more. The reference chemical shift is set to 0 ppm for hydrogen in tetramethylsilane, but similar results can be obtained by setting the peak derived from the residual hydrogen in deuterated o-dichlorobenzene to 7.10 ppm as the reference value for the chemical shift. A peak such as $^{1}$H derived from a functional group-containing compound is assigned by a conventional method.

In the case of $^{13}$C-NMR measurement, for example, the measurement is performed using a nuclear magnetic resonance apparatus (ECP500 type manufactured by JEOL Ltd.) as a measuring device, with o-dichlorobenzene/deuterated benzene (80/20% by volume) mixed solvent as a solvent, under the following conditions: the measurement temperature is 120°C; the observed nucleus is $^{13}$C (125 MHz); single pulse proton decoupling is used; 45° pulse is used; a repetition time is 5.5 seconds; the number of integrations is 10,000 or more; and 27.50 ppm is set as a reference value of the chemical shift. The various signals are assigned based on a conventional method, and the quantification can be performed based on the integrated value of signal intensity.

Specific examples of the polyamide resin (A) include polyamide 6T6I, polyamide 6T66, and polyamide 6TDT.

The dicarboxylic acid-derived component unit in the polyamide resin (A) may include a component unit derived from a biomass-derived dicarboxylic acid, and the diamine-derived component unit may include a component unit derived from a biomass-derived diamine. In addition, the polyamide resin (A) may be a polyamide resin (A) derived from biomass, which is obtained by polymerizing a raw material group including a biomass-derived raw material.

(Physical properties)

From the viewpoint of further increasing the mechanical strength of the molded article, the melting point of the polyamide resin (A) is preferably 280°C or higher, more preferably 290°C or higher, and still more preferably 300°C or higher. In addition, from the viewpoint of suppressing the corrosion of the molding machine, the melting point of the polyamide resin (A) is preferably 320°C or lower. As a result, the polyamide resin can be melted at a lower temperature during molding, so that the thermal decomposition of the phosphinate compound can be suppressed. As a result, it is possible to suppress the corrosion of the molding machine due to the thermally decomposed phosphinate compound (specifically, phosphoric acid generated by thermal decomposition).

The melting point of the polyamide resin (A) can be set to fall within the above range by adjusting the composition

of the polyamide resin (A). For example, the melting point can be increased by increasing the content ratio of the component unit derived from terephthalic acid, which will be described below.

In addition, the glass transition temperature (Tg) of the polyamide resin (A) as measured by a differential scanning calorimeter (DSC) is preferably 70°C or higher and 145°C or lower, more preferably 75°C or higher and 125°C or lower, and still more preferably 80°C or higher and 100°C or lower. When the glass transition temperature (Tg) is 70°C or higher, the temperature at which the mobility of the molecules becomes active in a high-temperature environment becomes high, and therefore, the mobility of the molecules can be suppressed, thereby further improving the heat resistance of the polyamide resin composition and the molded article. For the same reason, when the glass transition temperature (Tg) is 80°C or higher, the heat resistance of the polyamide resin composition and the molded article can be further sufficiently increased. In addition, when the glass transition temperature (Tg) is 145°C or lower, the fluidity of the resin composition can be easily maintained without excessively increasing the mold temperature during molding processing, and thus the moldability can be improved.

The heat of fusion (ΔH) of the polyamide resin (A) as measured by differential scanning calorimetry (DSC), is preferably more than 5 J/g. The heat of fusion is an indicator of the crystallinity of a resin, which means that the higher the heat of fusion, the higher the crystallinity. When the heat of fusion (ΔH) of the polyamide resin (A) exceeds 5 J/g, the crystallinity is increased, so that the tensile strength of the obtained molded article can be increased.

The melting point and the heat of fusion (ΔH) of the polyamide resin (A) can be measured using a differential scanning calorimeter (DSC220C type, manufactured by Seiko Instruments Inc.).

Specifically, approximately 5 mg of the polyamide resin (A) is sealed in an aluminum pan for measurement, and the sealed polyamide resin (A) is heated from room temperature to 350°C at 10°C/min. To completely melt the resin, the resin was held at 350°C for 3 minutes, and then cooled to 30°C at a rate of 10°C/min. After the resin was allowed to stand at 30°C for 5 minutes, the second heating was performed at 10°C/min to 350°C. The temperature (°C) of the endothermic peak in the second heating is used as the melting point (Tm) of the polyamide resin (A), and the displacement point corresponding to the glass transition is used as the glass transition temperature (Tg). The heat of fusion (ΔH) is determined from the area of the endothermic peak during melting in the first temperature rising process according to JIS K7122.

The intrinsic viscosity [η] of the polyamide resin (A) as measured in 96.5% sulfuric acid at a temperature of 25°C, is 0.90 dl/g or more, preferably 0.90 dl/g or more and 1.20 dl/g or less, more preferably 1.00 dl/g or more and 1.20 dl/g or less, and particularly preferably 1.00 dl/g or more and 1.10 dl/g or less. When the intrinsic viscosity [η] of the polyamide resin (A) is 1.00 dl/g or more, the mechanical strength (tensile strength or the like) of the molded article including a thick-walled portion is easily and sufficiently increased, and when the intrinsic viscosity [η] is 1.20 dl/g or less, the fluidity of the resin composition during molding is less likely to be impaired. The intrinsic viscosity [η] can be adjusted by adjusting the molar ratio of the dicarboxylic acid-derived component unit (Aa) to the diamine-derived component unit (Ab). Specifically, the closer the molar ratio of the dicarboxylic acid-derived component unit (Aa) to the diamine-derived component unit (Ab) is to 1:1, the higher the intrinsic viscosity can be. In addition, the intrinsic viscosity [η] can be adjusted by the amount of terminal blocking of the polyamide resin (A) or the like.

The intrinsic viscosity [η] of the polyamide resin (A) can be measured as follows. In 50 ml of a 96.5% sulfuric acid solution, 0.5 g of the polyamide resin (A) is dissolved to prepare a sample solution. The falling time (seconds) of the obtained solution under the condition of 25°C ± 0.05°C is measured using a Ubbelohde viscometer, and the intrinsic viscosity is calculated based on the following expression.

$$[\eta] = \eta SP/(C^*(1 + 0.205\eta SP))$$

[η]: Intrinsic viscosity (dl/g)
ηSP: Specific viscosity
C: Sample concentration (g/dl)
t: Falling time of sample solution (seconds)
$t_0$: Falling time of blank sulfuric acid (seconds)

$$\eta SP = (t - t_0)/t_0$$

The polyamide resin (A) can be produced by the same method as a known polyamide resin, and can be produced, for example, by polycondensation of a dicarboxylic acid and a diamine in a uniformly dissolved solution. Specifically, as described in WO03/085029, a low-order condensate is obtained by heating a dicarboxylic acid and a diamine in the presence of a catalyst, and then a shear stress is applied to the melt of this low-order condensate for subjecting the melt to polycondensation, thereby producing the polyamide resin.

The content of the polyamide resin (A) is preferably 25.00% by mass or more and 65.00% by mass or less, preferably 30.00% by mass or more and 60.00% by mass or less, and more preferably 35.00% by mass or more and

55.00% by mass or less, based on the total mass of the polyamide resin composition. When the content is 25.00% by mass or more, the tensile strength of the molded article of the polyamide resin composition can be further increased. When the content is 65.00% by mass or less, the tensile strength and the flame retardancy of the molded article including a thick-walled portion can be further increased because other components such as a polyamide resin (B) and a phosphinate compound (C) described below can be included in the polyamide resin composition.

1-2. Polyamide resin (B)

The polyamide resin (B) has a heat of fusion (ΔH) of 0 J/g or more and 5 J/g or less as measured by a differential scanning calorimeter (DSC).

As described above, the heat of fusion is an indicator of the crystallinity of a resin, which means that the smaller the heat of fusion, the lower the crystallinity. Therefore, the heat of fusion of the polyamide resin (B) is preferably 0 J/g. In addition, the polyamide resin (B) is preferably an amorphous resin whose melting point is substantially unmeasurable by a differential scanning calorimeter (DSC). In the present specification, the phrase "melting point is substantially unmeasurable" means that an endothermic peak based on crystal melting is not substantially observed in the second heating in the measurement of the melting point using a differential scanning calorimeter (DSC) as described above.

The heat of fusion (ΔH) of the polyamide resin (B) described above can be set to fall within the above range by adjusting the composition of the polyamide resin (B). For example, the heat of fusion can be reduced by increasing the content ratio of the component unit derived from isophthalic acid, which will be described below.

The polyamide resin (B) includes a dicarboxylic acid-derived component unit (Ba) and a diamine-derived component unit (Bb).

(Dicarboxylic acid-derived component unit (Ba))

The dicarboxylic acid-derived component unit (Ba) includes a component unit derived from terephthalic acid.

The content of the component unit derived from terephthalic acid is preferably 0 mol% or more and 50 mol% or less, and more preferably 15 mol% or more and 45 mol% or less, based on the total number of moles of the dicarboxylic acid-derived component unit (Ba).

The dicarboxylic acid-derived component unit (Ba) preferably includes a component unit derived from isophthalic acid. With this configuration, the concentration of aromatic rings in the polyamide resin (B) increases, and the polyamide resin is more likely to be carbonized. As a result, the flame retardancy of the molded article can be further increased.

The content of the component unit derived from isophthalic acid is preferably 50 mol% or more and 100 mol% or less, and more preferably 55 mol% or more and 85 mol% or less, based on the total number of moles of the dicarboxylic acid-derived component unit (Ba). When the content of the isophthalic acid component unit is 50 mol% or more, the crystallinity of the polyamide resin (B) can be further reduced.

When the dicarboxylic acid-derived component unit (Ba) includes a component unit derived from terephthalic acid and a component unit derived from isophthalic acid, the molar ratio of the component unit derived from isophthalic acid to the component unit derived from terephthalic acid (component unit derived from isophthalic acid/component unit derived from terephthalic acid) is preferably 55/45 to 95/5, more preferably 60/40 to 80/20, and still more preferably 60/40 to 70/30. When the molar ratio is in the above range, the crystallinity of the polyamide resin (B) can be further reduced. As a result, the crystallinity of the polyamide resin can be further reduced, and thus difference in curing rate between the outer side and the inner side of the thick-walled portion of the molded article can be reduced. As a result, the occurrence of voids and cracks in the thick-walled portion is further suppressed, thereby further increasing the tensile strength.

(Diamine-derived component unit (Bb))

The diamine-derived component unit (Bb) includes a component unit derived from 1,6-diaminohexane.

The content of the component unit derived from 1,6-diaminohexane is preferably 30 mol% or more and 100 mol% or less, and more preferably 70 mol% or more and 100 mol% or less, based on the total number of moles of the diamine-derived component unit (Bb).

The diamine-derived component unit (Bb) may include a component unit derived from a diamine other than the component unit derived from 1,6-diaminohexane. Examples of the other diamines include aliphatic diamines (other than 1,6-diaminohexane) each having 4 or more and 15 or less carbon atoms, alicyclic diamines each having 4 to 20 carbon atoms, and aromatic diamines. The types of the diamines may be the same as those described for the polyamide resin (A). The content of the component unit derived from another diamine can be, for example, 0 mol% or more and 10 mol% or less based on the total number of moles of the diamine-derived component unit (Bb).

The component units of the polyamide resin (B) and the ratio thereof can be calculated from a charging ratio when the polyamide resin (B) is prepared or can be measured by an NMR method. For the NMR method, the same method as

that described for the polyamide resin (A) can be used.

Specific examples of the polyamide resin (B) include polyamide 6I6T.

The intrinsic viscosity [η] of the polyamide resin (B) as measured in 96.5% sulfuric acid at a temperature of 25°C, is preferably 0.60 dl/g or more and 1.60 dl/g or less, and more preferably 0.60 dl/g or more and 1.20 dl/g or less. When the intrinsic viscosity [η] of the polyamide resin (B) is 0.60 dl/g or more, the decrease in tensile strength of the molded article including a thick-walled portion can be sufficiently suppressed. When the intrinsic viscosity [η] is 1.60 dl/g or less, the fluidity of the polyamide resin composition during molding is less likely to be impaired. The intrinsic viscosity of the polyamide resin (B) can be measured by the same method as the intrinsic viscosity of the polyamide resin (A).

The polyamide resin (B) can be produced by the same method as that described for the polyamide resin (A).

The content of the polyamide resin (B) is 10.0 parts by mass or more and 40.0 parts by mass or less, preferably 15.0 parts by mass or more and 30.0 parts by mass or less, based on 100 parts by mass of the total mass of the polyamide resin. When the content is 10.0 parts by mass or more, the occurrence of voids and cracks in the thick-walled portion during molding can be suppressed. As a result, the tensile strength in the thick-walled portion can be increased. When the content is 40.0 parts by mass or less, the content of the polyamide resin (A) in the polyamide resin can be relatively increased, and thus the tensile strength of the molded article can be increased.

The dicarboxylic acid-derived component unit in the polyamide resin (B) may include a component unit derived from a biomass-derived dicarboxylic acid, and the diamine-derived component unit may include a component unit derived from a biomass-derived diamine. In addition, the polyamide resin (B) may be a polyamide resin (B) derived from biomass, which is obtained by polymerizing a raw material group including a biomass-derived raw material.

1-3. Phosphinate compound (C)

In the present embodiment, the polyamide resin composition includes a phosphinate compound (C) that is a flame retardant.

The phosphinate compound is, for example, a compound represented by the following formula (I) or formula (II).

[Chemical formula 1]

$$\left[ R^1R^2P(=O)-O \right]_m^{-} \; M^{m+} \qquad (I)$$

$$\left[ O-P(=O)(R^1)-R^3-P(=O)(R^2)-O \right]_n^{2-} \; M_x^{m+} \qquad (II)$$

In formula (I) and formula (II), $R^1$ and $R^2$ each independently represent a linear or branched alkyl group having 1 to 6 carbon atoms or an aryl group. $R^3$ represents a linear or branched alkylene group having 1 to 10 carbon atoms, an arylene group having 6 to 10 carbon atoms, an alkylarylene group having 6 to 10 carbon atoms, or an arylalkylene group having 6 to 10 carbon atoms. M represents Mg, Ca, Al, Sb, Sn, Ge, Ti, Zn, Fe, Zr, Ce, Bi, Sr, Mn, Li, Na, K, and/or a protonated nitrogen base. In the formulas, m, n, and x each independently represent an integer of 1 to 4.

Specific examples of the phosphinate compound include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methanedi(methylphosphinate), magnesium methanedi(methylphosphinate), aluminum methanedi(methylphosphinate), zinc methanedi(methylphosphinate), calcium benzene-1,4-(dimethylphosphinate), magnesium benzene-1,4-(dimethylphosphinate), aluminum benzene-1,4-(dimethylphosphinate), zinc benzene-1,4-(dimethylphosphinate), calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate. Among these, calcium dimethylphosphinate, aluminum dimethylphosphinate, zinc dimethylphosphinate, calcium ethylmethylphosphinate, aluminum ethylmethylphosphinate, zinc ethylmethylphosphinate, calcium diethylphosphinate, aluminum diethylphosphinate, or zinc diethylphosphinate is preferred, and aluminum diethylphosphinate is more preferred.

The content of the phosphinate compound (C) is 10.0 parts by mass or more and 22.0 parts by mass or less,

preferably 10.0 parts by mass or more and 21.0 parts by mass or less, more preferably 10.0 parts by mass or more and 20.0 parts by mass or less, and still more preferably 15.0 parts by mass or more and 20.0 parts by mass or less, based on 100 parts by mass of the total mass of the polyamide resin. When the content is 22.0 parts by mass or less, the decomposition of the polyamide resin by phosphoric acid generated by the thermal decomposition of the phosphinate compound (C) during molding can be suppressed. As a result, the decrease in tensile strength of the molded article can be suppressed. In addition, when the content is 10.0 parts by mass or more, the flame retardancy of the molded article can become satisfactory.

1-4. Reinforcing material (D)

In the present embodiment, from the viewpoint of sufficiently increasing the tensile strength of the molded article, the polyamide resin composition preferably includes a reinforcing material (D). When the polyamide resin composition includes the reinforcing material (D), the content of the reinforcing material (D) is preferably 30% by mass or more and more preferably 35% by mass or more, based on the total mass of the polyamide resin composition. The upper limit value of the content of the reinforcing material (D) is preferably 50% by mass.

The reinforcing material may be an inorganic filler. Examples of the reinforcing material include fibrous reinforcing materials such as glass fibers, wollastonite, potassium titanate whiskers, calcium carbonate whiskers, aluminum borate whiskers, magnesium sulfate whiskers, zinc oxide whiskers, milled fibers, and cut fibers, and granular reinforcing materials. These reinforcing materials may be used alone or in combination. Among these, from the viewpoint of easily increasing the mechanical strength of a resin member, wollastonite, glass fiber, or potassium titanate whisker is preferred, and wollastonite or glass fiber is more preferred.

From the viewpoint of moldability of the polyamide resin composition and mechanical strength and heat resistance of the resin member to be obtained, the average fiber length of the fibrous reinforcing material is preferably 1 μm or more and 20 mm or less, and more preferably 5 μm or more and 10 mm or less.

The cross-sectional shape of the fibrous reinforcing material may be circular or non-circular, but from the viewpoint of increasing the tensile strength of the molded article, the cross-sectional shape is preferably circular. When the molded article includes a thick-walled portion, the fibers are more likely to be aligned in the thickness direction of the thick-walled portion, so that the circular cross-sectional shape can exhibit a higher reinforcing effect (effect of increasing the tensile strength of the molded article) against cracks generated inside the thick-walled portion. The above-described cross-sectional shape can be confirmed by observation with an optical microscope.

The average fiber length and average fiber diameter of the fibrous reinforcing material can be measured by the following method.

1) After a polyamide resin composition is dissolved in a hexafluoroisopropanol/chloroform solution (0.1/0.9 vol%), the resulting liquid is filtered and the obtained residue is collected.
2) The residue obtained in the above-described step 1) is dispersed in water, and the fiber length (Li) and the fiber diameter (di) of each of randomly selected 300 fibers are measured with an optical microscope (magnification: 50×). Then, qi is defined as the number of fibers whose fiber length is Li, and the weight average length (Lw) is calculated based on the following equation and used as the average fiber length of the fibrous reinforcing material.

$$\text{Weight average length (Lw)} = (\Sigma qi \times Li^2) / (\Sigma qi \times Li)$$

In the similar manner, ri is defined as the number of fibers whose fiber diameter is Di, and the weight average diameter (Dw) is calculated based on the following equation and used as the average fiber diameter of the fibrous reinforcing material.

$$\text{Weight average diameter (Dw)} = (\Sigma ri \times Di^2) / (\Sigma ri \times Di)$$

When the melting point (Tm) of the polyamide resin (A) is 320°C or lower, the content of the reinforcing material (D) is preferably 30% by mass or more, more preferably 35% by mass or more, and still more preferably 40% by mass or more, based on the total mass of the polyamide resin composition.

When the melting point (Tm) of the polyamide resin (A) is higher than 320°C, the content of the reinforcing material (D) is preferably 30% by mass or more and 50% by mass or less, and more preferably 30% by mass or more and less than 40% by mass, based on the total mass of the polyamide resin composition. The polyamide resin (A) having a melting point (Tm) higher than 320°C is melt-kneaded with other components at a higher temperature during the production of the polyamide resin composition. Therefore, from the viewpoint of further suppressing the thermal

decomposition of the phosphinate compound (C), it is preferable to suppress the application of heat such as shearing heat to the polyamide resin composition during melt kneading. In this case, when the content of the reinforcing material (D) is 50% by mass or less, shearing heat is less likely to be generated during melt kneading. As a result, the thermal decomposition of the phosphinate compound (C) is less likely to occur, the decomposition of the polyamide resin by phosphoric acid is suppressed, and the tensile strength of the molded article can be further increased.

1-5. Other components

The polyamide resin composition may include another known component.

Examples of other components include flame retardants other than the phosphinate compounds, flame retardant auxiliary agents, nucleating agents, lubricants, colorants, heat stabilizers, corrosion resistance improvers, drip inhibitors, ion trapping agents, elastomers (rubber), antistatic agents, release agents, antioxidants (phenols, amines, sulfur compounds, phosphorus compounds, and the like), heat stabilizers other than the above (lactone compounds, vitamin E, hydroquinones, and the like), light stabilizers (benzotriazoles, triazines, benzophenones, benzoates, hindered amines, oxanilides, and the like), and other polymers (polyolefins, olefin copolymers such as ethylene/propylene copolymers, ethylene/1-butene copolymers, propylene/1-butene copolymers, polystyrene, polycarbonate, polyacetal, polysulfone, polyphenylene oxide, fluororesins, silicone resins, LCP, and the like).

Examples of the flame retardant auxiliary agent include metal oxides and metal hydroxides. Specifically, zinc borate, boehmite, zinc stannate, iron oxide, zinc oxide, or tin oxide is preferred, and zinc borate is more preferred.

The content of the flame retardant auxiliary agent is preferably 0.5% by mass or more and 5.0% by mass or less, and more preferably 1.0% by mass or more and 3.0% by mass or less, based on the total mass of the polyamide resin composition.

1-5-1. Nucleating agent

The nucleating agent can promote the crystallization of the polyamide resin (A). Therefore, the tensile strength and elastic modulus of the resin member can be further increased.

Examples of the nucleating agent include metal salt-based compounds such as sodium 2,2-methylenebis(4,6-di-t-butylphenyl)phosphate, aluminum tris(p-t-butylbenzoate), and stearates, sorbitol-based compounds such as bis(p-methylbenzylidene)sorbitol and bis(4-ethylbenzylidene)sorbitol, and inorganic substances such as talc, calcium carbonate, and hydrotalcite. Among these, talc is preferred from the viewpoint of further increasing the crystallinity of a resin member. These nucleating agents may be used alone or in combination.

Talc generally contains hydrous magnesium silicate ($SiO_2$: 58% to 64%, MgO: 28% to 32%, $Al_2O_3$: 0.5% to 5%, and $Fe_2O_3$: 0.3% to 5%) as the main component thereof. The average particle diameter of talc is not particularly limited but is preferably 1 to 15 μm. When the average particle diameter of talc is within the above range, it is easy to disperse talc in the polyamide resin (A) without impairing the fluidity of the polyamide resin composition. From the same viewpoint, the average particle diameter of talc is more preferably 1 to 7.5 μm. The average particle diameter of the talc can be measured by a laser diffraction method, for example, a laser diffraction method using a Shimadzu particle size distribution analyzer (SALD-2000A type) manufactured by Shimadzu Corporation.

The content of the nucleating agent is preferably 0.10 parts by mass or more and 5.00 parts by mass or less, and more preferably 0.10 parts by mass or more and 3.00 parts by mass or less, based on the total mass of the polyamide resin composition. When the content of the nucleating agent is within the above range, the degree of crystallinity of the resin member is easily and sufficiently increased, and sufficient mechanical strength is easily obtained.

1-5-2. Lubricant

The lubricant increases the injection fluidity of the polyamide resin composition and improves the appearance of the obtained resin member. The lubricant may be a fatty acid metal salt such as a metal salt of an oxycarboxylic acid and a metal salt of a higher fatty acid.

The oxycarboxylic acid in the oxycarboxylic acid metal salt may be an aliphatic oxycarboxylic acid or an aromatic oxycarboxylic acid. Examples of the aliphatic oxycarboxylic acid include aliphatic oxycarboxylic acids each having 10 or more and 30 or less carbon atoms, such as α-hydroxymyristic acid, α-hydroxypalmitic acid, α-hydroxystearic acid, α-hydroxyeicosanoic acid, α-hydroxydocosanoic acid, α-hydroxytetraeicosanoic acid, α-hydroxyhexaeicosanoic acid, α-hydroxyoctaeicosanoic acid, α-hydroxytriacontanoic acid, β-hydroxymyristic acid, 10-hydroxydecanoic acid, 15-hydroxypentadecanoic acid, 16-hydroxyhexadecanoic acid, 12-hydroxystearic acid, and ricinoleic acid. Examples of the aromatic oxycarboxylic acid include salicylic acid, m-oxybenzoic acid, p-oxybenzoic acid, gallic acid, mandelic acid, and tropic acid.

Examples of the metal in the oxycarboxylic acid metal salt include alkali metals such as lithium, and alkaline earth

metals such as magnesium, calcium, and barium.

Among these, the oxycarboxylic acid metal salt is preferably a metal salt of 12-hydroxystearic acid, and more preferably magnesium 12-hydroxystearate and calcium 12-hydroxystearate.

Examples of the higher fatty acid in the higher fatty acid metal salt include higher fatty acids each having 15 or more and 30 or less carbon atoms such as stearic acid, oleic acid, behenic acid, and montanic acid.

Examples of metals in the higher fatty acid metal salt include calcium, magnesium, barium, lithium, aluminum, zinc, sodium, potassium, and the like.

Among these, the higher fatty acid metal salt is preferably calcium stearate, magnesium stearate, barium stearate, calcium behenate, sodium montanate, or calcium montanate.

The content of the lubricant is preferably 0.01% by mass or more and 1.30% by mass or less based on the total mass of the polyamide resin composition. When the content of the lubricant is 0.01% by mass or more, the fluidity during molding is more likely to increase, and the appearance of the obtained molded article is more likely to improve. When the content of the lubricant is 1.30% by mass or less, gas generated by the decomposition of the lubricant is less likely to be generated during molding, and the appearance of the molded product is more likely to become satisfactory.

1-5-3. Colorant

The colorant imparts a desired color tone to the resin member. The colorant is not particularly limited, but may be a pigment. Examples of the pigment include inorganic pigments such as carbon black, alumina, titanium oxide, chromium oxide, iron oxide, zinc oxide, and barium sulfate, and organic pigments such as azo pigments, phthalocyanine pigments, quinacridone pigments, perylene pigments, anthraquinone pigments, thioindigo pigments, and indanthrene pigments.

The content of the colorant is preferably 0.01% by mass or more and 5.00% by mass or less, and more preferably 0.10% by mass or more and 2.00% by mass or less, based on the total mass of the polyamide resin composition. The colorant imparts a desired color tone to the resin member. The colorant is not particularly limited, but may be a pigment. Examples of the pigment include inorganic pigments such as carbon black, alumina, titanium oxide, chromium oxide, iron oxide, zinc oxide, and barium sulfate, and organic pigments such as azo pigments, phthalocyanine pigments, quinacridone pigments, perylene pigments, anthraquinone pigments, thioindigo pigments, and indanthrene pigments.

The content of the colorant is preferably 0.01% by mass or more and 5.00% by mass or less and more preferably 0.10% by mass or more and 2.00% by mass or less, based on the total mass of the polyamide resin composition.

1-6. Method for producing polyamide resin composition

The polyamide resin composition can be produced by a known resin kneading method, for example, a method of mixing the above-described polyamide resin (A), polyamide resin (B), phosphinate compound (C), and other components as necessary with a Henschel mixer, a V-blender, a ribbon blender, or a tumbler blender, or a method of further melt-kneading the mixture with a single-screw extruder, a multi-screw extruder, a kneader, or a Banbury mixer and then granulating or pulverizing the mixture. At this time, the melting temperature during melt kneading is preferably the melting point (Tm) of the polyamide resin (A) + 10°C or higher and the melting point (Tm) of the polyamide resin (A) + 20°C or lower.

2. Molded article

The molded article of the present invention is obtained by molding the polyamide resin composition of the present invention and includes a thick-walled portion having a thickness of 3.5 mm or more. The decrease in tensile strength of the thick-walled portion can be suppressed by using the above-described polyamide resin composition. The molded article may have an overall thickness of 3.5 mm or more, or a part of the molded article may be a thick-walled portion having a thickness of 3.5 mm or more. The thickness of the thick-walled portion is preferably 4.0 mm or more, and more preferably 4.5 mm or more. The upper limit value of the thickness is not particularly limited, but is, for example, 10.0 mm.

The molded article can be produced by a typical melt molding method, for example, a compression molding method or an injection molding method, using the above-described polyamide resin composition. For example, in the injection molding, the gate size is preferably φ0.5 mm or more from the viewpoint of sufficient filling of the resin. In addition, it is preferable to provide a gas vent at a filling end in order to release the decomposition gas from the molded article.

For example, the molded article can be produced as follows: charging the polyamide resin composition of the present invention into an injection molding machine with the cylinder temperature thereof adjusted to be equal to or higher than the melting point of the polyamide resin (A), for example, about 280°C or higher and 350°C or lower; melting the polyamide resin composition; and introducing the polyamide resin composition into a mold having a predetermined shape.

The shape of the molded article produced using the polyamide resin composition of the present invention is not particularly limited, and the molded article may have various shapes depending on the applications.

Examples of the applications of the molded article of the polyamide resin composition in the present embodiment

include vehicle structural components, vehicle-mounted products, housings of electronic apparatuses, housings of electric home appliances, structural components, mechanical components, various automotive components, components for electronic apparatuses, and medical devices.

More specifically, examples of the vehicle applications include pyrofuses, instrument panels, console boxes, door handles, door trim, shift levers, pedals, glove boxes, bumpers, hood, fenders, trunks, doors, roofs, pillars, seats, steering wheels, bus bars, terminals, terminal blocks, high-voltage connectors, motors, power conversion devices (inverters and converters), ECU boxes, electrical components, engine peripheral components, drive system/gear peripheral components, intake/exhaust system components, and cooling system components. In addition, examples of the applications as precision electronic components include connectors, relays, and gears.

## Examples

Hereinafter, the present invention will be described with reference to Examples. The scope of the present invention is not interpreted to be limited by the Examples.

### 1. Synthesis/preparation of materials

### 1-1. Synthesis of polyamide resin (A)

<Polyamide resin (A-1) (6T66)>

Into an autoclave having a capacity of 13.6 L, the following were charged: 2800 g (24.1 mol) of 1,6-diaminohexane, 2184 g (13.1 mol) of terephthalic acid, 1572 g (10.8 mol) of adipic acid, 5.67 g ($5.4 \times 10^{-2}$ mol) of sodium hypophosphite monohydrate as a catalyst, 36.5 g (0.30 mol) of benzoic acid as a molecular weight adjuster, and 545 g of distilled water. The autoclave was then fully purged with nitrogen. Stirring was started at 190°C, and the internal temperature was raised to 250°C over 3 hours. At this time, the internal pressure of the autoclave was increased to 3.03 MPa. After the reaction was continued for 1 hour, the low-order condensate was taken out by performing releasing into the atmosphere from a spray nozzle installed in the lower part of the autoclave. Thereafter, the low-order condensate was cooled to room temperature, pulverized to have a particle diameter of 1.5 mm or less with a pulverizer, and dried at 110°C for 24 hours. The obtained low-order condensate had an intrinsic viscosity [$\eta$] of 0.15 dl/g.

Next, this low-order condensate was placed in a solid phase polymerization apparatus with shelves, and after purging with nitrogen, the temperature was increased to 180°C over about 1 hour and 30 minutes. After the reaction was carried out for 1 hour and 30 minutes, the temperature was lowered to room temperature.

Subsequently, the obtained prepolymer was subjected to melt polymerization in a twin-screw extruder with a screw diameter of 30 mm and an L/D of 36, at a barrel set temperature of 330°C, a screw rotation speed of 200 rpm, and a resin supply rate of 6 kg/h, thereby obtaining a polyamide resin (A-1).

The obtained polyamide resin (A-1) had an intrinsic viscosity [$\eta$] of 1.00 dl/g, a melting point (Tm) of 310°C, a glass transition temperature (Tg) of 85°C, and a heat of fusion ($\Delta$H) of 50 J/g. In addition, the composition of the obtained polyamide resin (A-1) was as follows: the content of the component unit derived from terephthalic acid in the dicarboxylic acid-derived component unit was 55 mol%, the content of the component unit derived from adipic acid in the dicarboxylic acid-derived component unit was 45 mol%, and the content of the component unit derived from 1,6-diaminohexane in the diamine-derived component unit was 100 mol%.

<Synthesis of polyamide resin (A-2) (6T66)>

A polyamide resin (A-2) was obtained in the same manner as in the synthesis of the polyamide resin (A-1), except that the used raw materials were changed to 2475 g (14.9 mol) of terephthalic acid, 2905 g (25.0 mol) of 1,6-hexanediamine, and 1300 g (8.9 mol) of adipic acid.

The obtained polyamide resin (A-2) had an intrinsic viscosity [$\eta$] of 0.80 dl/g, a melting point (Tm) of 320°C, a glass transition temperature (Tg) of 95°C, and a heat of fusion ($\Delta$H) of 50 J/g. In addition, the composition of the obtained polyamide resin (A-2) was as follows: the content of the component unit derived from terephthalic acid in the dicarboxylic acid-derived component unit was 62.5 mol%, the content of the component unit derived from adipic acid in the dicarboxylic acid-derived component unit was 37.5 mol%, and the content of the component unit derived from 1,6-diaminohexane in the diamine-derived component unit was 100 mol%.

<Synthesis of polyamide resin (A-3) (6T6I)>

A polyamide resin (A-3) was obtained in the same manner as in the synthesis of the polyamide resin (A-1), except

that the raw materials were changed to 2774 g (16.7 mol) of terephthalic acid, 2800 g (24.1 mol) of 1,6-hexanediamine, and 1196 g (7.2 mol) of isophthalic acid.

The obtained polyamide resin (A-3) had an intrinsic viscosity [η] of 1.00 dl/g, a melting point (Tm) of 330°C, a glass transition temperature (Tg) of 125°C, and a heat of fusion (ΔH) of 50 J/g. In addition, the composition of the obtained polyamide resin (A-3) was as follows: the content of the component unit derived from terephthalic acid in the dicarboxylic acid-derived component unit was 70 mol%, the content of the component unit derived from isophthalic acid in the dicarboxylic acid-derived component unit was 30 mol%, and the content of the component unit derived from 1,6-diaminohexane in the diamine-derived component unit was 100 mol%.

1-2. Synthesis of polyamide resin (B) (6I6T)

A polyamide resin (B) was obtained in the same manner as in the synthesis of the polyamide resin (A-1), except that the raw materials were changed to 2581 g (15.5 mol) of isophthalic acid, 2800 g (24.1 mol) of 1,6-diaminohexane, and 1390 g (8.4 mol) of terephthalic acid.

The obtained polyamide resin (B) had an intrinsic viscosity [η] of 0.54 dl/g, a glass transition temperature (Tg) of 125°C, and a heat of fusion (ΔH) of 0 J/g, and no melting point (Tm) was measured. In addition, the composition of the obtained polyamide resin (B) was as follows: the content of the component unit derived from terephthalic acid in the dicarboxylic acid-derived component unit was 35 mol%, the content of the component unit derived from isophthalic acid in the dicarboxylic acid-derived component unit was 65 mol%, and the content of the component unit derived from 1,6-diaminohexane in the diamine-derived component unit was 100 mol%.

1-3. Phosphinate compound (C)

As the phosphinate compound, aluminum phosphinate (Exolit OP-1230, manufactured by Clariant) was used.

1-4. Reinforcing material (D)

Glass fiber (ECS03T-262H, cross-sectional shape: circular, manufactured by Nippon Electric Glass Co., Ltd.) was used as the reinforcing material.

1-5. Other components

1-5-1. Flame retardant auxiliary agent

The following components were used as a flame retardant auxiliary agent.

Flame retardant auxiliary agent 1: zinc borate
Flame retardant auxiliary agent 2: zinc oxide

1-5-2. Lubricant

Calcium montanate was used as the lubricant.

1-5-3. Nucleating agent

Talc (average particle diameter of 6 μm) was used as a nucleating agent.

1-5-4. Colorant

A masterbatch including a pigment (polyamide 6T66/carbon black = 90/10) was used as the colorant.

2. Measurement

The physical properties of each resin were measured by the following method.

<Melting point (Tm) and glass transition temperature (Tg)>

The melting point (Tm) and the glass transition temperature (Tg) of a polyamide resin were measured using a

differential scanning calorimetry (DSC220C, manufactured by Seiko Instruments Inc.). Specifically, approximately 5 mg of a polyamide resin was sealed in an aluminum pan for measurement, set for differential scanning calorimetry, and heated from room temperature to 350°C at the rate of 10°C/min. To completely melt the resin, the resin was held at 350°C for 3 minutes, and then cooled to 30°C at a rate of 10°C/min. After the resin was allowed to stand at 30°C for 5 minutes, the second heating was performed at 10°C/min to 350°C. The endothermic peak temperature (°C) in this second heating was used as the melting point (Tm) of the polyamide resin, and the displacement point corresponding to the glass transition was used as the glass transition temperature (Tg).

<Heat of fusion (ΔH)>

The heat of fusion (ΔH) of the polyamide resin was determined from the area of the heat generation peak of crystallization in the first temperature rising process according to JIS K 7122 (2012).

(Intrinsic viscosity [η])

The intrinsic viscosity [η] of a polyamide resin was obtained as follows: 0.5 g of the polyamide resin was dissolved in 50 ml of 96.5% sulfuric acid solution to prepare a sample solution, the falling time of the sample solution was measured with an Ubbelohde viscometer at 25 ± 0.05°C, and the intrinsic viscosity was calculated based on the equation

$$\text{“}[\eta] = \eta SP / (C(1 + 0.205\eta SP))\text{.”}$$

[η]: Intrinsic viscosity (dl/g)
ηSP: Specific viscosity
C: Sample concentration (g/dl)
t: Falling time of sample solution (seconds)
t0: Falling time of blank sulfuric acid (seconds)

$$\eta SP = (t - t_0)/t_0$$

3. Preparation of polyamide resin composition

The above-described materials were mixed in a tumbler blender at a composition ratio (unit: parts by mass) shown in Tables 1 and 2, and melt-kneaded using a 30 mmφ vented twin-screw extruder under a cylinder temperature condition of 300°C to 335°C. Thereafter, the kneaded product was extruded into a strand shape and cooled in a water bath. Thereafter, the strand was taken out by a pelletizer and cut to obtain each of polyamide resin compositions 1 to 16 in the form of pellets.

4. Evaluation

<Tensile strength and tensile elongation>

Each polyamide resin composition was injected under the following conditions to obtain an ISO dumbbell-shaped test piece Type A with a thickness of 4.0 mm.

Molding machine: SG50M3 manufactured by Sumitomo Heavy Industries, Ltd.
Molding machine cylinder temperature: melting point of polyamide resin (A) + 10°C
Mold temperature: glass transition temperature of each polyamide resin (A) + 35°C

The obtained test piece was left at a temperature of 23°C in a nitrogen atmosphere for 24 hours. Next, a tensile test was performed in an atmosphere at a temperature of -40°C and a relative humidity of 50% in accordance with ISO 527, and the tensile strength and the tensile elongation were measured.

<Flame retardancy>

Each polyamide resin composition was injection molded under the conditions below to prepare a test piece of 1/32 inches × 1/2 × 5 inches. Using the prepared test piece, a vertical burning test was performed in accordance with the

UL94 standard (UL Test No. UL94 dated June 18, 1991), and the flame retardancy was evaluated.

Molding machine: TR40S3A manufactured by Sodick Plastech Co., Ltd.
Molding machine cylinder temperature: melting point of each polyamide resin (A) + 10°C
Mold temperature: glass transition temperature of each polyamide resin (A) + 35°C

<Corrosion and abrasion evaluation>

(Evaluation method)

Using a connector mold (molded product weight including a sprue and a runner: 1 g) having 14 terminals, continuous injection molding was performed 10,000 shots.

Injection molding machine: SE50DU manufactured by Sumitomo Heavy Industries, Ltd.
Molding machine cylinder set temperature: melting point of each polyamide resin (A) + 10°C
Mold temperature: 100°C

The weight of the screw component of the injection device was measured before and after the injection molding, and the corrosion and abrasion rate (%) was calculated by the following expression.

Corrosion and abrasion rate (%) = {(screw component weight before injection molding - screw component weight after injection molding) / (screw component weight before injection molding)} $\times$ 100

The composition and the evaluation results of each polyamide resin composition are shown in Tables 1 and 2. The numerical values of the composition in Tables 1 and 2 represent parts by mass

Table 1

| | | | Example 1 | Example 2 | Example 3 | Example 4 | Example 5 | Example 6 | Example 7 | Example 8 |
|---|---|---|---|---|---|---|---|---|---|---|
| Polyamide resin composition No. | | | 1 | 2 | 3 | 4 | 5 | 6 | 7 | 8 |
| Composition | Polyamide resin (A) | A-1 (6T66) | 48.04 | 42.48 | 36.92 | 39.25 | 36.01 | 44.08 | | |
| | | A-2 (6T66) | | | | | | | | |
| | | A-3 (6T6I) | | | | | | | 48.04 | 40.77 |
| | Polyamide resin (B) (6I6T) | | 5.56 | 11.12 | 16.68 | 10.31 | 9.50 | 11.52 | 5.56 | 4.75 |
| | Phosphinate compound (C) | | 11.00 | 11.00 | 11.00 | 10.20 | 9.41 | 9.00 | 11.00 | 9.40 |
| | Reinforcing material (D) | | 30.00 | 30.00 | 30.00 | 35.00 | 40.00 | 30.00 | 30.00 | 40.00 |
| | Flame retardant auxiliary agent | Flame retardant auxiliary agent 1 | 2.00 | 2.00 | 2.00 | 1.85 | 1.71 | 2.00 | 2.00 | 1.71 |
| | | Flame retardant auxiliary agent 2 | 0.20 | 0.20 | 0.20 | 0.19 | 0.17 | 0.20 | 0.20 | 0.17 |
| | Lubricant | | 0.50 | 0.50 | 0.50 | 0.50 | 0.50 | 0.50 | 0.50 | 0.50 |
| | Nucleating agent | | 0.70 | 0.70 | 0.70 | 0.70 | 0.70 | 0.70 | 0.70 | 0.70 |
| | Colorant | | 2.00 | 2.00 | 2.00 | 2.00 | 2.00 | 2.00 | 2.00 | 2.00 |
| Intrinsic viscosity η of polyamide resin (A) [dl/g] | | | 1.00 | 1.00 | 1.00 | 1.00 | 1.00 | 1.00 | 1.00 | 1.00 |
| Polyamide resin (B) / (Polyamide resin (A) + Polyamide resin (B)) [%] | | | 10.0 | 20.1 | 30.1 | 20.1 | 20.1 | 20.1 | 10.0 | 10.0 |
| Phosphinate compound (C) / (Polyamide resin (A) + Polyamide resin (B)) [%] | | | 19.9 | 19.9 | 19.9 | 19.9 | 19.9 | 15.7 | 19.9 | 19.9 |
| Evaluation | Tensile strength [MPa] | | 169 | 170 | 174 | 179 | 186 | 173 | 177 | 173 |
| | Tensile elongation [%] | | 2.4 | 2.3 | 2.4 | 2.2 | 2.0 | 2.1 | 2.3 | 1.7 |
| | Flame retardancy | | V-0 | V-0 | V-0 | V-0 | V-0 | V-0 | V-0 | V-0 |
| | Corrosion and abrasion rate [%] | | 1.6 | 1.5 | 1.5 | 2.2 | 3.0 | - | 4.9 | 5.7 |

Table 2

| | | | Comp. Example 1 | Comp. Example 2 | Comp. Example 3 | Comp. Example 4 | Comp. Example 5 | Comp. Example 6 | Comp. Example 7 | Comp. Example 8 |
|---|---|---|---|---|---|---|---|---|---|---|
| Polyamide resin composition No. | | | 9 | 10 | 11 | 12 | 13 | 14 | 15 | 16 |
| Composition | Polyamide resin (A) | A-1 (6T66) | | 53.60 | 46.48 | 40.88 | | 25.8 | | |
| | | A-2 (6T66) | 51.60 | | | | | | 41.28 | 42.48 |
| | | A-3 (6T6I) | | | | | 53.60 | | | |
| | Polyamide resin (B) (6I6T) | | | | 12.12 | 10.72 | | 27.8 | 10.32 | 11.12 |
| | Phosphinate compound (C) | | 13.00 | 11.00 | 6.00 | 13.00 | 11.00 | 11.00 | 13.00 | 11.00 |
| | Reinforcing material (D) | | 30.00 | 30.00 | 30.00 | 30.00 | 30.00 | 30.00 | 30.00 | 30.00 |
| | Flame retardant auxiliary agent | Flame retardant auxiliary agent 1 | 2.00 | 2.00 | 2.00 | 2.00 | 2.00 | 2.00 | 2.00 | 2.00 |
| | | Flame retardant auxiliary agent 2 | 0.20 | 0.20 | 0.20 | 0.20 | 0.20 | 0.20 | 0.20 | 0.20 |
| | Lubricant | | 0.50 | 0.50 | 0.50 | 0.50 | 0.50 | 0.50 | 0.50 | 0.50 |
| | Nucleating agent | | 0.70 | 0.70 | 0.70 | 0.70 | 0.70 | 0.70 | 0.70 | 0.70 |
| | Colorant | | 2.00 | 2.00 | 2.00 | 2.00 | 2.00 | 2.00 | 2.00 | 2.00 |
| Intrinsic viscosity η of polyamide resin (A) [dl/g] | | | 0.80 | 1.00 | 1.00 | 1.00 | 1.00 | 1.00 | 0.80 | 0.80 |
| Polyamide resin (B) / (Polyamide resin (A) + Polyamide resin (B)) [%] | | | 0.0 | 0.0 | 20.1 | 20.1 | 0.0 | 50.2 | 20.0 | 20.1 |
| Phosphinate compound (C) / (Polyamide resin (A) + Polyamide resin (B)) [%] | | | 24.3 | 19.9 | 9.9 | 24.3 | 19.9 | 19.9 | 24.3 | 19.9 |
| Evaluation | Tensile strength [MPa] | | 140 | 161 | 176 | 161 | 165 | 164 | 149 | 154 |
| | Tensile elongation [%] | | 1.8 | 2.1 | 2.2 | 2.0 | 1.9 | 1.9 | 1.8 | 1.9 |
| | Flame retardancy | | V-0 | V-0 | V-1 | V-0 | V-0 | V-1 | V-0 | V-0 |
| | Corrosion and abrasion rate [%] | | 2.8 | 1.8 | - | - | 5.1 | - | - | - |

From the results of the polyamide resin compositions 1 to 8, it was found that when a molded article including a thick-walled portion was produced, the tensile strength of the molded article could be increased while the flame retardancy was satisfactory when the polyamide resin (A) had an intrinsic viscosity of 0.9 dl/g or more, the content of the flame retardant was 20% by mass or less, and the polyamide resin (B) whose melting point is substantially unmeasurable was included.

The present application is entitled to and claims the benefit of Japanese Patent Application No. 2023-179584 filed on October 18, 2023, the disclosure of which including the specification and claims is incorporated herein by reference in its entirety.

Industrial Applicability

The polyamide resin composition of the present invention can, when a molded article including a thick-walled portion is produced therefrom, increase the tensile strength of the molded article and make the flame retardancy of the molded article satisfactory. Therefore, the molded product using the polyamide resin composition is useful, for example, for an automotive component.

## Claims

**1.** A polyamide resin composition, comprising:

a polyamide resin; and
a phosphinate compound (C) having a content of 10.0 parts by mass or more and 22.0 parts by mass or less based on 100 parts by mass of the polyamide resin, wherein
the polyamide resin includes

a polyamide resin (A) including a dicarboxylic acid-derived component unit (Aa) and a diamine-derived component unit (Ab), and
a polyamide resin (B) including a dicarboxylic acid-derived component unit (Ba) and a diamine-derived component unit (Bb),

the polyamide resin (A) has a melting point of 280°C or higher as measured by a differential scanning calorimeter (DSC) and has an intrinsic viscosity [$\eta$] of 0.90 dl/g or more as measured in 96.5% sulfuric acid at a temperature of 25°C,
the polyamide resin (B) has a heat of fusion ($\Delta$H) of 0 J/g or more and 5 J/g or less as measured by the differential scanning calorimeter (DSC),
the polyamide resin (B) has a content of 10.0 parts by mass or more and 40.0 parts by mass or less based on 100 parts by mass of the polyamide resin,
the dicarboxylic acid-derived component unit (Aa) and the dicarboxylic acid-derived component unit (Ba) each include a component unit derived from terephthalic acid, and
the diamine-derived component unit (Ab) and the diamine-derived component unit (Bb) each include a component unit derived from 1,6-diaminohexane.

**2.** The polyamide resin composition according to claim 1, wherein the melting point of the polyamide resin (A) as measured by the differential scanning calorimeter (DSC) is 320°C or lower.

**3.** The polyamide resin composition according to claim 1, further comprising:
a reinforcing material (D) having a content of 30% by mass or more based on a total mass of the polyamide resin composition.

**4.** The polyamide resin composition according to claim 1, wherein the dicarboxylic acid-derived component unit (Ba) further includes a component unit derived from isophthalic acid.

**5.** The polyamide resin composition according to claim 1, wherein the dicarboxylic acid-derived component unit (Aa) further includes a component unit derived from adipic acid.

**6.** The polyamide resin composition according to claim 1, wherein the polyamide resin composition is used for producing a molded article including a thick-walled portion having a thickness of 3.5 mm or more.

**7.** A molded article obtained by molding the polyamide resin composition according to any one of claims 1 to 6, wherein the molded article includes a thick-walled portion having a thickness of 3.5 mm or more.

**INTERNATIONAL SEARCH REPORT**

International application No. **PCT/JP2024/036744**

**A. CLASSIFICATION OF SUBJECT MATTER**

***C08L 77/06***(2006.01)i; ***C08G 69/26***(2006.01)i; ***C08K 3/013***(2018.01)i; ***C08K 5/5313***(2006.01)i
FI: C08L77/06; C08K5/5313; C08K3/013; C08G69/26

According to International Patent Classification (IPC) or to both national classification and IPC

**B. FIELDS SEARCHED**

Minimum documentation searched (classification system followed by classification symbols)

C08L77/06; C08G69/26; C08K3/013; C08K5/5313

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-120908 A (EMS-PATENT AG) 02 July 2015 (2015-07-02) claims, paragraphs [0003]-[0005], [0008], [0040]-[0050], [0054]-[0058], [0063]-[0065], [0087]-[0090], [0096]-[0097], examples | 1-4, 6-7 |
| X | JP 2012-522116 A (E.I. DU PONT DE NEMOURS AND COMPANY) 20 September 2012 (2012-09-20) claims, paragraphs [0010], [0017]-[0033], [0042]-[0043], examples | 1-7 |
| X | JP 2013-542311 A (E.I. DU PONT DE NEMOURS AND COMPANY) 21 November 2013 (2013-11-21) claims, paragraphs [0005], [0022]-[0038], [0050], [0056]-[0057], examples | 1-7 |
| A | WO 2020/184270 A1 (MITSUI CHEMICALS, INC.) 17 September 2020 (2020-09-17) claims, paragraphs [0008], [0016]-[0028], [0030]-[0034], [0057]-[0066], [0075]-[0076], examples | 1-7 |
| A | JP 2017-500705 A (DSM IP ASSETS B.V.) 05 January 2017 (2017-01-05) entire text | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 November 2024** | **26 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | Telephone No. |

Form PCT/ISA/210 (second sheet) (July 2022)

INTERNATIONAL SEARCH REPORT

International application No.
**PCT/JP2024/036744**

**C. DOCUMENTS CONSIDERED TO BE RELEVANT**

| Category* | Citation of document, with indication, where appropriate, of the relevant passages | Relevant to claim No. |
|---|---|---|
| A | JP 2009-079212 A (EMS-PATENT AG) 16 April 2009 (2009-04-16) entire text | 1-7 |
| A | WO 2020/153330 A1 (TOYOBO CO., LTD.) 30 July 2020 (2020-07-30) entire text | 1-7 |

Form PCT/ISA/210 (second sheet) (July 2022)

**INTERNATIONAL SEARCH REPORT**
**Information on patent family members**

International application No.
**PCT/JP2024/036744**

| Patent document cited in search report | Publication date (day/month/year) | Patent family member(s) | Publication date (day/month/year) |
|---|---|---|---|
| JP 2015-120908 A | 02 July 2015 | US 2015/0175804 A1<br>claims, paragraphs [0008]-[0011], [0024], [0055]-[0064], [0068]-[0081], [0085]-[0097], [0120]-[0124], [0130]-[0132], examples<br>EP 2886605 A1<br>CN 104725837 A<br>KR 10-2015-0073850 A | |
| JP 2012-522116 A | 20 September 2012 | US 2010/0249292 A1<br>claims, paragraphs [0011], [0022]-[0038], [0047]-[0048], examples<br>WO 2010/117708 A1<br>EP 2414446 A1<br>KR 10-2011-0137381 A<br>CN 102378784 A | |
| JP 2013-542311 A | 21 November 2013 | US 2013/0217814 A1<br>claims, paragraphs [0005], [0037]-[0051], [0063]-[0075], [0081]-[0082], examples<br>WO 2012/064965 A2<br>EP 2638110 A2<br>CN 102464881 A | |
| WO 2020/184270 A1 | 17 September 2020 | CN 113412298 A<br>claims, examples | |
| JP 2017-500705 A | 05 January 2017 | US 2016/0322738 A1<br>entire text<br>WO 2015/091786 A1<br>EP 3083790 A1<br>KR 10-2016-0101987 A<br>CN 105829418 A | |
| JP 2009-079212 A | 16 April 2009 | US 8324307 B2<br>entire text<br>EP 2028231 A1<br>CN 101372555 A<br>KR 10-2009-0021132 A | |
| WO 2020/153330 A1 | 30 July 2020 | CN 113260664 A<br>entire text | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012022116 A
- JP 2015120908 A
- JP 2013542311 A
- JP 2013523958 A
- JP 2015110764 A
- JP 2009079212 A
- JP 2017500705 A
- WO 03085029 A
- JP 2023179584 A